Europäisches Patentamt

European Patent Office

Office européen des brevets

(19)

(11) **EP 1 256 938 A2**

(12) **EUROPÄISCHE PATENTANMELDUNG**

(43) Veröffentlichungstag:
**13.11.2002 Patentblatt 2002/46**

(51) Int Cl.⁷: **G10L 15/18**, G06F 17/28

(21) Anmeldenummer: **02010009.5**

(22) Anmeldetag: **04.05.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **10.05.2001 DE 10122756**

(71) Anmelder: **DaimlerChrysler AG**
**70567 Stuttgart (DE)**

(72) Erfinder: **Minker, Wolfgang**
**89081 Ulm (DE)**

(54) **Verfahren zur Generierung von Daten für die semantische Sprachanalyse**

(57)     Die Erfindung betrifft ein Verfahren zur semantischen Sprachanalyse, bei dem durch die sequenzielle Gegenüberstellung von Wort und Etikett die Übersichtlichkeit des Datensatzes erhöht und die Herstellung großer Datenmengen beschleunigt wird, die in der stochastischen Modellierung benötigt werden. Das erfindungsgemäße Verfahren ermöglicht außerdem eine problemlose Kombination von semantischen und syntaktischen Etiketten. Diese flexible Produktion von Trainingsdaten mit skalierbarem Informationsgehalt ist für eine experimentelle Ermittlung optimaler Modelleigenschaften des Etikettierverfahrens wichtig.

FIG. 1

EP 1 256 938 A2

**Beschreibung**

Die Erfindung betrifft ein Verfahren zur semantischen Sprachanalyse nach dem Oberbegriff des Patentanspruch 1.

Die vorliegende Erfindung befaßt sich mit dem Problem des maschinellen Sprachverständnisses.

Herkömmliche regelbasierende Verfahren zur semantischen Analyse von gesprochenen Sätzen erzielen gute Resultate in begrenzten Anwendungsbereichen. Die manuelle Entwicklung einer solchen aus expliziten Regeln bestehenden Komponente ist jedoch kostspielig, denn jede Applikation verlangt spezifische Anpassung oder gar ein jeweils völlig neues System. Statistische Modellierung ersetzt die von Hand erstellten Regeln, welche die Ausgabe des Spracherkenners in eine semantische Darstellung umsetzen. Die Parameter der Wahrscheinlichkeitsmodelle leiten sich aus der mit Computern durchgeführten automatischen Analyse großer Datenmengen von gesprochenen Sätzen und deren semantischen Darstellungen ab. Für den Einsatz in anderen Anwendungsbereichen und Sprachen ist es daher ausreichend, die semantische Analysekomponente mit den entsprechenden Daten zu trainieren. Dies steht im Gegensatz zur manuellen Übersetzung und Anpassung einer regelbasierten Grammatik.

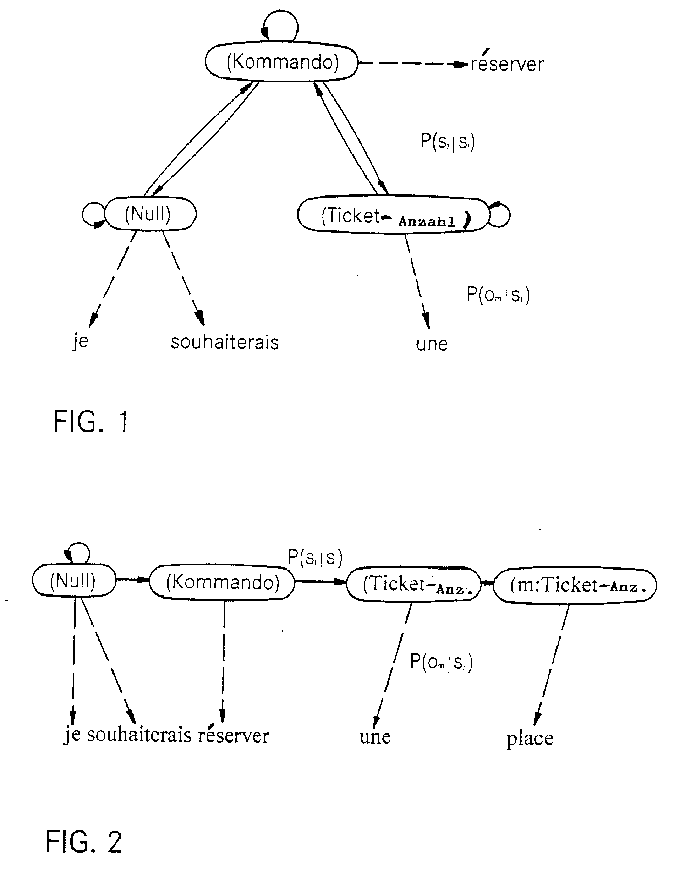

In einer stochastischen Komponente unterscheidet man zwei Prozessschritte: In der Trainingsphase erstellt der Parameterschätzer des Computersystems das stochastische Modell, das beispielsweise als Hidden Markov Model (HMM) implementiert wird. In der Testphase liefert der semantische Dekoder des Computersystems die wahrscheinlichste Sequenz aus semantischen Etiketten bei unbekanntem gesprochenem Eingabesatz. Das verwendete HMM ist in Fig. 1 dargestellt. Es soll Benutzeranfragen an ein Zugauskunfts- und Reservierungssystem für die französische Sprache in eine semantische Darstellung umsetzen. Im Beispiel sind die semantischen Etiketten (Null), (Ticket-Anzahl) und (Kommando) als Zustände $s_j$, und die Wörter *je (ich), souhaiterais (möchte gerne), réserver (reservieren)* als Beobachtungen $o_m$ definiert. Als Beispiel wird ein ergodisches semantisches HMM benutzt. Die Etiketten (Null), (Ticket-Anzahl) und (Kommando) sind als Zustände vollständig miteinander verbunden.

In Anlehnung an die HMM-Theorie besteht die semantische Dekodierung in der Maximierung von $P(S|O)$, d.h. der Wahrscheinlichkeit einer Sequenz $S$ aus Zuständen $s_j$ bei gegebener Sequenz $O$ aus Beobachtungen $O_m$. In Fig. 2 ist ein möglicher Pfad durch das HMM dargestellt, wobei die Beispielzustände aus Fig. 1 verwendet wurden. Der mit place (Platz) assoziierte Marker (m: Ticket-Anzahl) soll sicherstellen, daß das Wort une (einen) als die Zahl der zu reservierenden Plätze (Ticket-Anzahl) interprätiert wird. Bei der zeitlichen Progression durch die Zustandssequenz wird eine Beobachtungssequenz erzeugt. Jede Beobachtung stellt ein Wort im Satz *je souhaiterais réserver une place*

*(ich möchte gerne einen Platz reservieren)* dar.

Die Progression und Zustandssequenzengenerierung werden durch Übergangswahrscheinlichkeiten zwischen den Zuständen $P(s_j|s_i)$ und durch Beobachtungswahrscheinlichkeiten $P(o_m|s_j)$ bestimmt. Beide Modellparametertypen werden vom Computersystem aus Trainingsdaten erlernt, welche Wörter und semantische Etiketten miteinander in Beziehung setzen. Auf der Grundlage der Modellparameter wird dann unter Benutzung des Viterbi-Algorithmus die wahrscheinlichste Zustandssequenz ermittelt (Literatur: L.R.Rabiner, B.H. Juang , IEEE Transaction on Acoustics, Speech and Signalprocesssing, Vol.3(1), S. 4-16 (1986)).

Da ein stochastisches Verfahren ausschließlich von Daten lernt, beschränkt sich die Übertragung einer Komponente zum maschinellen Sprachverständnis in andere Anwendungsbereiche und menschliche Sprachen auf ein Training mit applikationsspezifischen Trainingsdaten. Die semantische Etikettierung dieser Daten erfolgt meist durch ein halbautomatisches Verfahren, z.B. dem sogenannten *bootstrap*, mit dem eine automatische Kennzeichnung der Daten und eine manuelle Korrektur der Daten durchgeführt wird. In diesem Zusammenhang erschwert eine vielschichtige, komplexe semantische Darstellung die rasche Datenproduktion. Damit erhöhen sich Übertragungsphase und Übertragungsaufwand. Außerdem wird die Kombination der rein semantischen Etiketten mit Zusatzinformationen (z. B. in der Form von Syntax) erschwert.

Die Aufgabe der Erfindung besteht darin, ein Verfahren zur semantischen Sprachanalyse anzugeben, das derart allgemein und flexibel ausgelegt ist, daß es problemlos in neue Anwendungsbereiche und menschliche Sprachen übertragen werden kann.

Die Erfindung ist in Anspruch 1 beschrieben. Vorteilhafte Ausgestaltungen und Weiterbildungen sind den Unteransprüchen zu entnehmen.

Die Erfindung hat den Vorteil, daß die sequenzielle Gegenüberstellung von Wort und Etikett die Übersichtlichkeit des Datensatzes erhöht und die Herstellung großer Datenmengen beschleunigt, die in der stochastischen Modellierung benötigt werden. Das erfindungsgemäße Verfahren ermöglicht außerdem eine problemlose Kombination von semantischen und syntaktischen Etiketten. Diese flexible Produktion von Trainingsdaten mit skalierbarem Informationsgehalt ist für eine experimentelle Ermittlung optimaler Modelleigenschaften des Etikettierverfahrens wichtig.

Die Erfindung wird anhand von Ausführungsbeispielen beschrieben unter Bezugnahme auf schematische Zeichnungen.

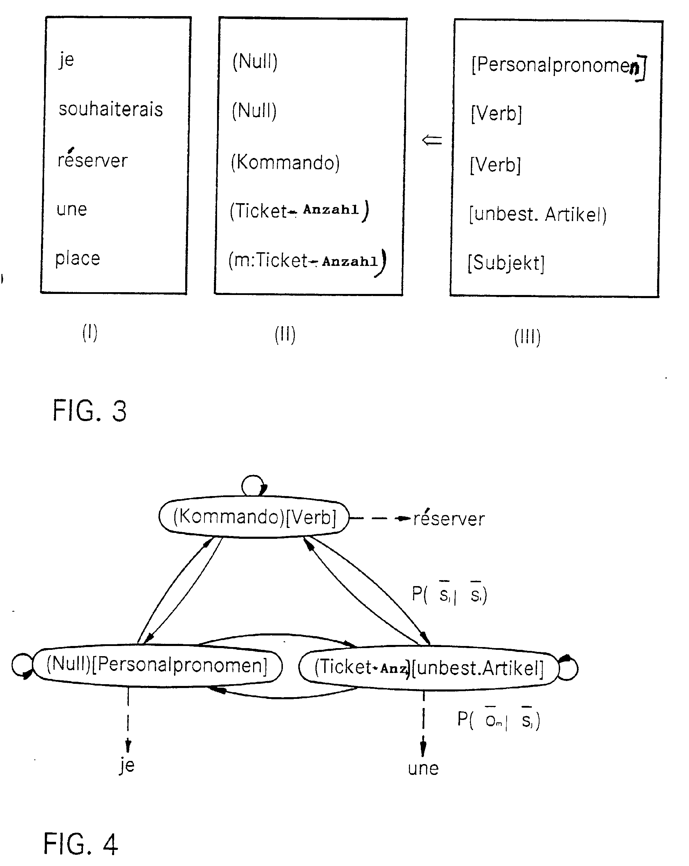

Die Erfindung geht davon aus, daß das stochastische Verfahren die Sequenzen aus Wörtern und zugeordneten semantischen Etiketten manipuliert, wobei die Etiketten aus Gründen der Übersichtlichkeit ebenfalls in sequenzieller Form dargestellt werden (Fig. 3, Spalten (I) und (II)). In dieser Darstellung beziehen sich (Null)-Etiketten auf Wörter ohne spezifische semantische Funktion im Kontext des Eingabesatzes, z.B. *je souhaiterais).*

Große Datenmengen semantischer Etiketten werden durch ein *bootstrap*-Verfahren erzeugt. Dabei wird der gesamte Datensatz in Teildatensätze unterschiedlicher Größe aufgeteilt. Der kleinste Teildatensatz wird manuell mit semantischen Etiketten versehen. Mit dem aus diesen Erstdaten errechneten Modell etikettiert das Computersystem nunmehr automatisch den nächst größeren Teildatensatz. Die gesamten etikettierten Daten werden dann manuell auf Konsistenz geprüft und zur Berechnung eines weiteren Modells herangezogen. Aufgrund seiner verbesserten Qualität etikettiert dieses Modell automatisch den nächst größeren Teildatensatz mit einer geringeren Fehlerrate. Das Verfahren wird iterativ fortgesetzt bis der gesamte Datensatz mit semantischen Etiketten versehen ist. Der manuelle Korrekturaufwand verringert sich dabei nach jeder Iteration.

Durch eine zusätzliche syntaktische Etikettierung (III) wird dem Eingabesatz eine syntaktische Kategorie zugeordnet. Syntaktisch-semantische Verbund-Etiketten stellen dabei die semantische Funktion des Wortes mit seiner syntaktischen Rolle im Eingabesatz dar.

Diese übersichtliche sequentielle Datendarstellung von Wörtern (I), semantischen Etiketten (II) und syntaktischen Etiketten am Beispiel gemäß Fig.3 beschleunigt die laufend notwendigen manuellen Konsistenzprüfungen.

In diesem Ausführungsbeispiel wird dem Eingabesatz *je souhaiterais réserver une place (ich möchte gerne einen Platz reservieren)* (I) eine Sequenz semantischer Etiketten (II) und eine Sequenz syntaktischer Etiketten (III) zugeordnet; die Sequenzen (II) und (III) werden zur Bildung der syntaktisch-semantischen Etiketten aneinandergefügt.

Die Spalte (III) in Fig. 3 zeigt eine zusätzliche syntaktische Etikettierung des Beispielsatzes *je souhaiterais réserver une place*. Diese Etikettierung erfolgt automatisch durch beispielsweise SYLEX, einem syntaktischen Analyseprogramm für die französische Sprache. Auf der Grundlage syntaktischer Gruppen ordnet SYLEX jedem Wort des Eingabesatzes eine syntaktische Kategorie zu.

Die in der Darstellung aus Fig. 3 erzeugten Spalten können durch z.B. einfache PEARL-Programmierung kombiniert werden, um unterschiedliche Modelle zu erzeugen. Syntaktisch-semantische Verbund-Etiketten werden z.B. durch Kopplung der Spalten (II) und (III) erzeugt. Ein Verbundetikett stellt dabei die semantische Funktion des Wortes mit seiner syntaktischen Rolle im Eingabesatz dar.

Fig. 4 zeigt, wie die syntaktisch-semantischen Etiketten im Hidden Markov Modell genutzt werden. Dabei wird die ergodische Topologie aus Fig. 1 benutzt. Im Beispiel sind die semantischen Etiketten (Null), (Ticket-Anzahl) und (Kommando) mit jeweils einem syntaktischen Etikett kombiniert und als Zustände $\bar{s}_j$, definiert.

Die Wörter *je (ich), souhaiterais (möchte gerne), réserver (reservieren)* sind als Beobachtungen $\bar{O}_m$ definiert. Die syntaktisch-semantischen Etiketten sind als Zustände vollständig miteinander verbunden. In Anlehnung an die HMM-Theorie besteht die Dekodierung in syntaktisch-semantische Etiketten in der Maximierung von $P(\bar{S} \mid \bar{O})$, d.h. der Wahrscheinlichkeit einer Sequenz $\bar{S}$ aus Zuständen $\bar{s}_j$ bei gegebener Sequenz $\bar{O}$ aus Beobachtungen $\bar{O}_m$.

Die Erfindung ist nicht auf die angegebenen Ausführungsbeispiele beschränkt, sondern es können andere stochastische Verfahren, z.B. Grammatische Inferenz, eingesetzt werden.

**Patentansprüche**

1. Verfahren zur semantischen Sprachanalyse, bei dem mittels stochastischer Verfahren Wörter und zugeordnete semantische Etiketten verarbeitet werden, **dadurch gekennzeichnet, daß** einer Wortsequenz (I) eine Sequenz semantischer Etiketten (II) sowohl manuell als auch über ein mittels Computersystem berechnetes, automatisches Etikettierverfahren zugeordnet wird, derart daß der gesamte Datensatz der Wortsequenzen in Teildatensätze unterschiedlicher Größe aufgeteilt wird, daß der kleinste Teildatensatz der Wortsequenzen manuell mit semantischen Etiketten versehen wird, daß mit dem aus diesen Erstdaten errechneten Modell das Computersystem automatisch den nächst größeren Teildatensatz etikettiert, und daß dieses Verfahren bis zur vollständigen Etikettierung des gesamten Datensatzes iterativ fortgesetzt wird.

2. Verfahren nach Anspruch 1, **dadurch gekennzeichnet, daß** der Wortsequenz (I) eine Sequenz syntaktischer Etiketten (III) mittels eines Computersystems automatisch zugeordnet wird, und daß die Sequenzen (II) und (III) zur Bildung von syntaktisch-semantischen Etiketten aneinandergefügt werden.

3. Verfahren nach Anspruch 2, **dadurch gekennzeichnet, daß** der Wortsequenz (I) eine Sequenz syntaktischer Etiketten (III) mittels eines syntaktischen Analyseprogramms automatisch zugeordnet wird.

4. Verfahren nach Anspruch 2, **dadurch gekennzeichnet, daß** die Sequenzen (II) und (III) zur Bildung von syntaktisch-semantischen Etiketten mittels eines Computerprogramm kombiniert werden, um unterschiedliche Modelle zu erzeugen.

5. Verfahren nach einem der vorhergehenden Ansprüche, **dadurch gekennzeichnet, daß** als stochastisches Verfahren das Hidden Markov Modell verwendet wird.

6. Verfahren nach Anspruch 5, **dadurch gekennzeichnet, daß** die semantischen Etiketten mit jeweils einem syntaktischen Etikett kombiniert und als Zustände $\bar{s}_j$ definiert werden, daß die Wörter als Beobachtungen $\bar{O}_m$ definiert werden, und daß die syntaktisch-semantischen Etiketten als Zustände vollständig miteinander verbunden werden.

7. Verfahren nach Anspruch 5, **dadurch gekennzeichnet, daß** durch die Maximierung der Wahrscheinlichkeit $P(\bar{S} \mid \bar{O})$ einer Sequenz $\bar{S}$ aus Zuständen $\bar{s}_j$ bei gegebener Sequenz $\bar{O}$ aus Beobachtungen $\bar{O}_m$ die semantische und syntaktische Dekodierung durchgeführt wird.

FIG. 1

FIG. 2

| je | (Null) | [Personalpronomen] |
|----|--------|---------------------|
| souhaiterais | (Null) | [Verb] |
| réserver | (Kommando) | [Verb] |
| une | (Ticket← Anzahl) | [unbest. Artikel) |
| place | (m:Ticket← Anzahl) | [Subjekt] |

⇐

(I)  (II)  (III)

# FIG. 3

(Kommando)[Verb] — — →réserver

$P(\overline{s}_i | \overline{s}_i)$

(Null)[Personalpronomen]   (Ticket←Anz)[unbest.Artikel]

$P(\overline{O}_m | \overline{s}_i)$

je   une

# FIG. 4